Europäisches Patentamt

(19) European Patent Office

Office européen des brevets

(11) Publication number: **0 089 941**
**A2**

(12) **EUROPEAN PATENT APPLICATION**

(21) Application number: **83870024.3**

(22) Date of filing: **17.03.83**

(51) Int. Cl.³: **B 60 P 1/44**

(30) Priority: **18.03.82 BE 207606**

(43) Date of publication of application:
**28.09.83 Bulletin 83/39**

(84) Designated Contracting States:
**AT CH DE FR GB IT LI LU NL SE**

(71) Applicant: **Caluwaerts, Karel Marie**
**Klein Holland, 53**
**B-2900 Londerzeel(BE)**

(72) Inventor: **Caluwaerts, Karel Marie**
**Klein Holland, 53**
**B-2900 Londerzeel(BE)**

(74) Representative: **Pieraerts, Jacques et al,**
**Bureau Gevers S.A. rue de Livourne 7, Bte. 1**
**B-1050 Bruxelles(BE)**

(54) Hydraulic loading bridge for trucks and similar.

(57) There is described a mechanism for a hydraulic loading bridge for trucks and similar, with a load platform (26) which is moved up and down by hydraulic lifting arms (18, 20), which is provided with means (30) which after adjusting the platform to a determined angle, make it possible to move said platform up and down under said angle, and insure the tipping "to the front" of said platform (26) on the ground or work floor without any sliding of the platform thereon.

FIG. 5

EP 0 089 941 A2

"Hydraulic loading bridge for trucks and similar".

This invention relates to a mechanism for a hydraulic loading bridge for trucks and similar, whereby a load platform is movable notably upwards and downwards from a vertical position to a horizontal position or vice-versa and may be adjusted at any level relative to the ground by means of two lifting arms and hydraulic cylinders hinged relative to the truck frame.

Load platforms which may be brought to various positions relative to a lorry and which may be located thereby vertically behind the back-wall of the lorry in riding condition or may be slid underneath said lorry, are known.

Various load platforms of the type under consideration have marked drawbacks.One such drawback is notably that the load platform sometimes tips down during the lowering of the platform proper.

The invention has moreover for object to provide various technical solutions which make the mechanism remarkably relia.ble and minimize the wear of some components, notably the lower side of the load platform as it engages the ground or the load surface.

Another advantage of the mechanism according to the invention lies in the complete

2                                           0089941

loading bridge having a very short building-in structure, in such a way that the structure may be arranged on substantially every truck.

Another advantage which completes the former one lies in the limited total built-in height which makes it possible to built-in the loading bridge with the mechanism according to the invention on every truck or lorry however low the floor thereof may lie.

Another advantage lies in the loading bridge according to the invention may be built-in on any type of truck whatsoever, whatever may the floor height thereof and whatever also may be the spacing from the frame lower side to the upper side of the load floor of the truck.

A last and very heavy advantage lies in no wear being caused to the load platform proper, mainly to the lower side thereof as it engages the ground or work floor.

For this purpose the mechanism according to the invention comprises on either side of  a cross-beam which is secured to the truck frame or  is movable along the lengthwise axis thereof,a housing wherein a rocking arm is supported which is swingable relative to said housing and whereon are hingedly supported the one end  of said lifting arm and the one end of said lifting cylinder, which lifting cylinder is hingedly supported with the other end thereof on a projection of said lifting arm, which lies on the other side of the lengthwise axis of said lifting arm relative to the hinge point thereof on said load platform, while between said load platform and said housing is mounted a hydraulic closing cylinder the hydraulic circuit of which is completely separated from the hydraulic circuit of said lifting cylinder.

A feature of the invention lies in the geometric axis of said closing cylinder and the straight line which joins the hinge point of said lifting arm on said load platform on the one hand, to the hinge point of said frame lifting arm on said rocking arm on the other hand, determining two sides of an imaginary distortable parallelogram.

The load platform according to the invention, or when said platform is in turn foldable in two parts, that part of the platform which faces the truck in the lowered position is further provided at the bottom, as considered along a vertical section, with a bulging which will engage the ground or work floor.

Other details and features of the invention will stand out from the following description, given by way of non limitative example and with reference to the accompanying drawings, in which :

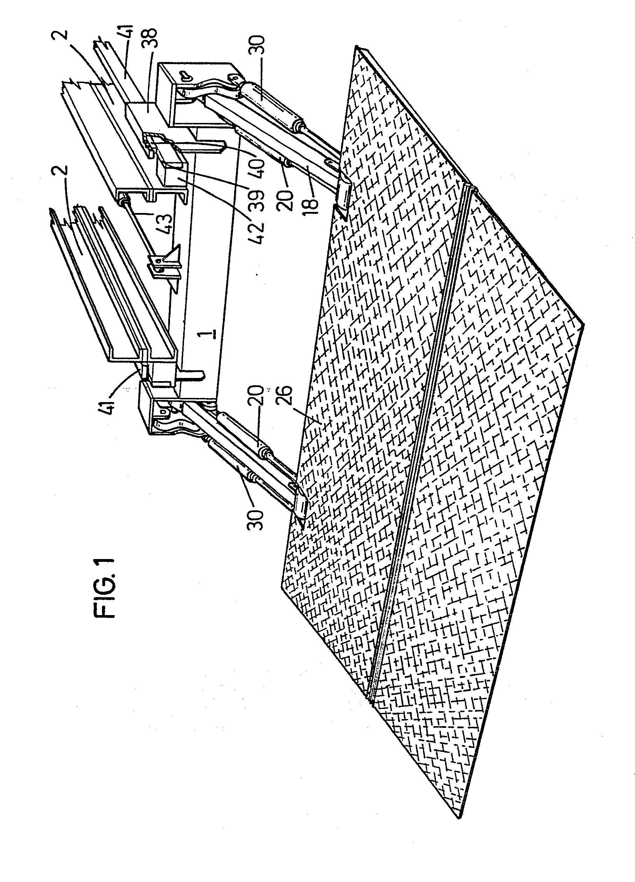

Figure 1 is a perspective showing of the mechanism according to the invention.

Figure 2 is a diagrammatic showing of the mechanism with a horizontally-adjusted load platform.

Figure 3 is another diagrammatic showing of the mechanism in that position where the load platform reaches the ground or work floor.

Figure 4 is a diagrammatic showing of the mechanism in that position where the load platform is adjusted with the top load surface thereof, in position relative to the ground or work floor.

Figure 5 is an exploded view of some main components from the mechanism according to the invention.

The mechanism as shown in the figures comprises a cross-beam 1 which is either fixedly connected to the lengthwise runner 2 of the truck frame 3, or is slidably mounted in the lengthwise direction relative to said frame as it will appear from the following description of the mechanism.

To each end of said cross-beam 1 is welded a housing 4 which is comprised of two side plates 5 and 6, a back wall plate 7 and a cover plate 8.

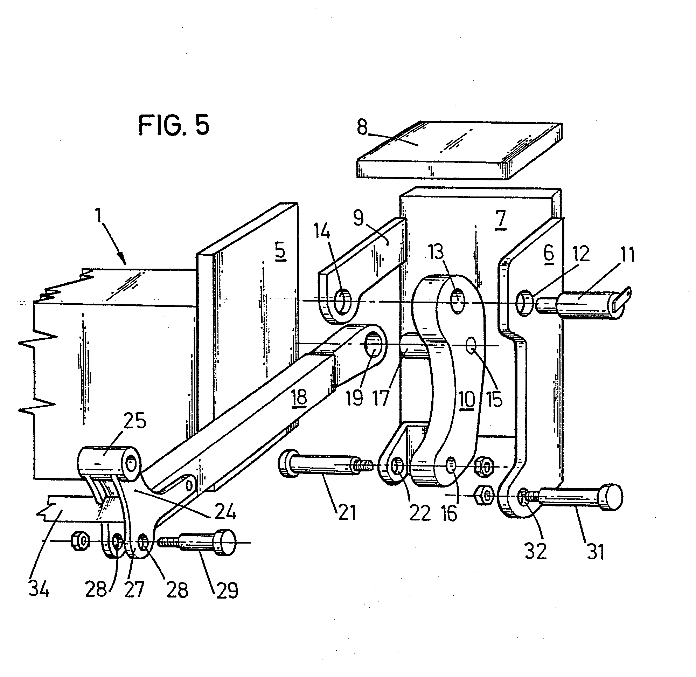

Inside each said housings 4 is swingably supported about an axis 11, a rocking arm 10 lying between the side plate 6 and an elbow 9 welded to the back wall plate 7. With reference to figure 5, the axis 11 and the openings 12, 13 and 14 should be considered as lying on a line, in such a way that the swinging axis of the rocking arm 10 is the geometric axis of said three openings.

The rocking arm 10 is further provided with two openings 15 and 16. Inside opening 15 is secured a shaft 17. About said shaft 17 hinges the lifting arm 18. The fixed shaft 17 is thus the hinge axis for the lifting arm 18.

Inside the opening 16 is supported the one end of a lifting cylinder 20 with the hinge axis 21 thereof. Said hinge axis 21 further passes through an opening 22 in an elbow 23 welded to the lowermost end of the rocking arm 10 (fig.5).

That end removed from the truck of said lifting arm 18 is doubly branched. The uppermost branch 24 bears a cylinder-shaped bearing 25 for the hinge connection with the load platform 26, while the lowermost branch 27 is provided with openings 28 for the hinge axis 29 from the one end of said lifting cylinder 20.

Relative to the housing 4 then hinges the one end of the closing cylinder 30, actually about a small shaft 31 which passes through an opening 32 at the bottom of side plate 6 of housing 4. The other end of said closing cylinder 30 hinges about a shaft 33 provided in the lowermost part of said load platform 26.

For structural reasons said branches 24 and 27 are designed as twin-shaped. For the same reasons the head of said closing cylinder 30 which hinges about said small shaft 31, is of fork shape, while the opposite end of the closing cylinder is of single design.

Those ends removed from the truck of both lifting arms 18 which end in the above-described branches 24 and 27, are connected together by a rod 34.

With the wordings "lifting cylinder" and "closing cylinder" is meant the complete unit formed by such mechanical components, that is as well the piston rods and pistons, as the cylinders proper.

The above-described mechanism which thus essentially comprises two discrete sets of two cylinders, has for object as already stated hereinabove :

1. The possible adjustment of the load platform at an angle relative to the horizontal plane and actually in such conditions that when lowering or raising said load platform, said angle remains unchanging, whereby the load platform can no more tip during such movements.

2. Letting the load platform slant to the front as it reaches the ground or work floor and letting such movement occur in such a way that the therefor-rounded portion of the load platform which first engages the ground or work floor does not slide thereon but rather performs a limited rotating motion in such a way that wear of said platform portion is strongly reduced. is substantially unimportant and the work floor is also saved.

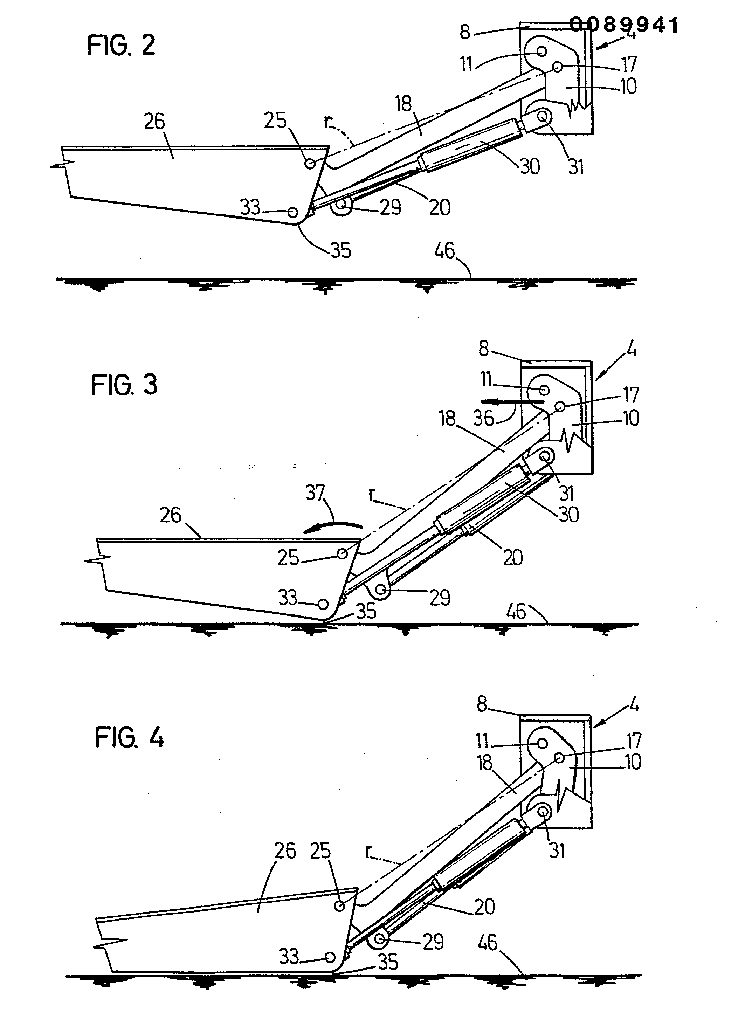

Indeed with more particular reference to figures 2, 3 and 4, it should first be noted that the straight line r which joins the hinge point 17, so-called due to the axis about which the lifting arm 18 rotates relative to the rocking arm 10, to the hinge point 25, so-called according to the cylinder-shaped bearing on the branch 24, and the center line of the closing cylinder 30 form two parallel sides from a distortable parallelogram. Both other sides are formed by straight lines which join the hinge points 17 and 31 on the one hand, and 25 and 33 on the other hand.

It is to be noted here that the hydraulic circuits of the lifting cylinders 20 are completely independent from the hydraulic circuits of the closing cylinders 30.

The function of the lifting cylinder 20 is thus exclusively limited to the raising and lowering of the load platform. The so-called closing cylinders have for object to adjust the angle formed by the load platform and the horizontal plane. When said angle which is dependent on the loading conditions and should not necessarily lead to the horizontal adjusting of the load platform, has been selected, said angle will remain unchanged during the complete swinging of the lifting arms. The prevailing conditions may be seen clearly from figures 2 and 3.

In figure 2 the lifting arms have brought the load platform 26 to a determined height above the ground or work floor (line 46), but the horizontal position of the load platform may be determined previously due to the action of the closing cylinders 30. By operating the closing cylinders 30, the load platform may thus be adjusted to any angle whatsoever and by locking the closing cylinders, the load platform remains adjusted to such an angle.

When the lifting arms 18 are left to further move down by letting the oil from the lifting cylinders 20 flow back to the oil tank, the therefor-rounded portion 35 which is provided along the so-called back side of the load platform, will engage the ground or work floor.

Load platforms generally have on the cross edge to be considered as back side, a greater thickness while the so-called "front side" is thinner. Load platforms have consequently along a vertical cross-section which should lie in parallel relationship with the lifting arms, a spar-shaped profile. When with the presently-known structures, the load platform is tipped "to the front", that is when it is brought to such a position that the load platform is adjusted slightly slanting, this may only occur with a motion which results in a fast wear of the lowermost thicker portion of the load platform. Indeed this movement causes a more or less linear displacement of said portion of the load platform along the ground or work floor. Due to the "friction" of this lower portion against the ground, said portion as well as the work floor are quickly damaged.

According to the invention, this is obviated due to the mechanism being provided with the required means which convert the "linear" and wear-generating motion of the lowermost rounded portion 35 into a rotating motion the center of which merges approximately with the axis of shaft 33.

As the portion 35 engages the ground or work floor at the end of the downwards motion of said lifting arms 18, the working of the lift arms remains unchanged in such a way that the lifting cylinders which "retract", pull the rocking arm 10 to the open side of housing 4, as the closing cylinders 30 remain locked.

Due to the spacing between axes 29 and 21 becoming shorter, the rocking arm 10 swings about the axis 11 thereof and as, as already stated, the closing cylinders remain unmovable, the rocking arm is displaced in the direction shown by arrow 36, while simultaneously axis 25 is moved along arrow 37.

Even if said movement of axis 25 does not occur absolutely according to an arc of circle and the center about which such movement is developed does not coincide accurately with the axis of shaft 33, it may actually be said in practice that there is a gyrating movement of shaft 25 about shaft 33. In other words there may be spoken of a swinging of the load platform 26 about the hinge axis of the closing cylinders.

To return the loading bridge level with the load floor of the truck, an operation of the lifting cylinders 18 in opposite direction is enough. Tipping of the load platform during the raising or lowering thereof is no more to be feared, as it appears from the above description of the mechanism.

When it is desired to have a load platform which is slidable underneath the truck, the cross-beam 1 is welded to guide plates 38. Said guide plates are provided at the top with a rectangular tube 39, fitted inwardly with sliding surfaces 40 from polytetrafluorethylene for example, which make the sliding of the guide plates along the guide 41 easier. The guides 41 run in parallel relationship with the lengthwise runners 2 of the frame, at a

**0089941**

distance therefrom which is determined by the width of the spacers 42. For the sliding to-and-fro of the cross-beam 1 together with the mechanism connected thereto, there is provided a hydraulic cylinder 43 the piston rod 44 of which is connected to two elbows 45 on the cross-beam 1.

From the above description of the mechanism according to the invention there also appears very clearly that the unit formed by the collapsed load platform, the cross-beam 1 and the housings wherein are hingedly mounted said rocking arms, has a particularly compact structure, in such a way that obstacles which are often present on trucks, such as brake cylinders, torsion stabilizers, load-dependent valves in the brake circuit and similar, do not form obstructions any more. The total built-in height of the mechanism is also remarkably low, in such a way that said mechanism may be built-in substantially on every truck whatever low may be the ground height thereof.

It must be understood that the invention is in no way limited to the above embodiments and that many changes may be brought thereto without departing from the scope of the invention as defined in the appended claims.

CLAIMS.

1.  Mechanism for a hydraulic loading bridge for trucks and similar, whereby a load platform is movable notably upwards and downwards from a vertical position to a horizontal position or vice-versa and may be adjusted at any level relative to the ground by means of two lifting arms and hydraulic cylinders hinged relative to the truck frame, which comprises on either side of a cross-beam (1) secured to the frame or movable along the lengthwise axis thereof, a housing (4) wherein a rocking arm (10) is supported which is swingable relative to said housing and whereon are hingedly supported the one end of said lifting arm (18) and the one end of said lifting cylinder (20), which lifting cylinder is hingedly supported with the other end thereof on a branch (27) of said lifting arm (18), which lies on the other side of the lengthwise axis of said lifting arm relative to the hinge point thereof on said load platform (26), while between said load platform (26) and said housing (4) is further mounted a hydraulic closing cylinder (30) the hydraulic circuit of which is completely separated from the hydraulic circuit of said lifting cylinder (20).

2.  Mechanism as defined in claim 1, in which the geometrical axis of said closing cylinder (30) and the straight line (r) which joins the hinge point (25) of said lifting lever (18) on said platform (26) on the one hand, to the hinge point (17) of that same lifting arm (18) on said rocking arm (10) on the other hand, determine two sides from an imaginary distortable parallelogram.

3. Mechanism as defined in either one of claims 1 and 2, in which the hinge point (25) of said lifting arm (18) relative to said load platform (26) on said platform, lies higher than the hinge point (33) of said closing cylinder (30) on said same load platform (26), at least when said platform is considered as horizontal.

4. Mechanism as defined in any one of claims 1 to 3, in which the hinge point (17) of said lifting arm (18) relative to said rocking arm (10), lies above the hinge point (21) of said lifting cylinder (20) relative to said same rocking arm (10).

5. Mechanism as defined in any one of claims 1 to 4, in which the end of said lifting arm (18) on that side which is hingedly connected to said load platform (26), is provided with two branches (24,27), whereby in the one branch (24) lies the hinge point with said load platform (26), and in the other branch (27) lies the hinge point with said lifting cylinder.

6. Mechanism as defined in any one of claims 1 to 5, in which the hinge point of said rocking arm (10) relative to said housing (4) lies above both said hinge points for lifting cylinder (20) and lifting arm (18).

7. Mechanism as defined in any one of claims 1 to 6, in which said load platform (26) or as said platform proper is collapsible in two parts, that part of the platform which faces in lowered position the truck, has at the bottom and as considered in a vertical cross-section, a rounded portion (35) for contacting the ground or work floor.

8. Mechanism as defined in any one of claims 1 to 7, in which said cross-beam (1) to the ends of which are secured said housings (4), is made fast underneath the lengthwise runners (2) of the truck frame.

9. Mechanism as defined in any one of claims 1 to 7, in which said cross-beam (1) is so mounted as to be slidable in the lengthwise direction along said lengthwise runners (2).

10. Mechanism as defined in any one of claims 1 to 9, in which said cross-beam (1) is provided on either side of the lengthwise runners (2) of the truck frame, with a guide plate (38) which is provided with a sliding surface (40) with which said plate may be slid along a guide (41) connected to said lengthwise runners (2).

11. Mechanism as defined in claim 10, in which said guide plates (38) grip partly at least about said guides (41).

12. Mechanism as defined in either one of claims 10 and 11, in which said sliding surfaces are comprised of polytetrafluorethylene.

FIG. 1

0089941

FIG. 2

FIG. 3

FIG. 4

FIG. 5